# EUROPÄISCHE PATENTANMELDUNG

(11) **EP 2 388 279 A1**
(43) Veröffentlichungstag der Anmeldung: **23.11.2011**
(21) Anmeldenummer: 10005173.9
(22) Anmeldetag: 18.05.2010
(51) Int. Cl.: C08F 2/32, C08G 59/18, C08G 59/40, C08J 9/28

(54) **2-Komponenten-Klebstoffe**

(71) Anmelder: Cognis IP Management GmbH, 40589 Düsseldorf (DE)
(72) Erfinder: Birnbrich, Paul, 42719 Solingen (DE); Thomas, Hans-Josef, 41352 Korschenbroich (DE); Stahlhut-Behn, Dagmar, 40699 Erkrath (DE)

(57) **Zusammenfassung**

Die Erfindung betrifft 2-Komponenten-Klebstoffe, enthaltend ein oder mehreren Epoxidharze als erste Komponente (E) und einen oder mehrere amphiphile Epoxidharzhärter als zweiter Komponente (H), mit der Maßgabe, dass der Einsatz der Klebstoffe in der Weise geschieht, dass die beiden Komponenten (E) und (H) in Wasser im Sinne einer Phaseninversionspolymerisation umgesetzt werden.

## Beschreibung

### Gebiet der Erfindung

Die Erfindung betrifft spezielle 2-Komponenten-Klebstoffe. Diese enthalten ein oder mehrere Epoxidharze als erste Komponente (E) und einen oder mehrere amphiphile Epoxidharzhärter als zweite Komponente (H), mit der Maßgabe, dass der Einsatz der Klebstoffe in der Weise geschieht, dass die beiden Komponenten (E) und (H) in Wasser im Sinne einer Phaseninversionspolymerisation umgesetzt werden, wodurch die ausgehärteten Klebstoffe in Form von nanoporösen Polymerschaumstoffen vorliegen.

### Stand der Technik

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Besebichtungsmassen (Aufbringung einer Deckschicht auf ein Substrat, zum Beispiel für Fußbodenbeschichtungen).

EP-B-488949 beschreibt ein 2-Komponenten-Klebstoff-System basierend auf einer Kombination von Epoxidharzen und weiteren Formulierungsbestandteilen als Komponente 1 sowie einer Härterkomponente 2 bestehend aus Aminaddukten sowie Additiven zur Beschleunigung und Haftungsverbesserung.

EP-A-2135909 beschreibt ebenfalls ein 2-Komponenten-Klebstoffsystem basierend auf einer Formulierung von Epoxydharzen mit verbesserter Schlagzähigkeit der Verklebung.

US-A-2004/0285922 beschreibt ein wasserbasiertes 1-Komponeten-Klebstoff-System, in dem die Epoxidharzkomponente verkapselt vorliegt, zur Verklebung von Verschraubungen.

Mit dem Begriff Fügen gemäß DIN 8593 bezeichnet man in der Fertigungstechnik das dauerhafte Verbinden von mindestens zwei Bauteilen. Durch das Fügen wird der Zusammenhalt zwischen den zuvor getrennten Werkstücken lokal - d.h. an den Fügestellen - geschaffen und eine Formänderung des neu entstandenen Teils herbeigeführt. Die Verbindung kann dabei von fester oder beweglicher Gestalt sein. Über die Wirkflächen der Verbindung werden die auftretenden Betriebskräfte übertragen. Die zu fügenden Werkstücke können dabei sowohl von geometrisch bestimmter Form sein, als auch aus formlosem Stoff bestehen. Die DIN 8593 unterteilt das Fügen in neun Gruppen, in denen die verschiedenen Fügeverfahren zusanunengefasst werden. Ein besonders wichtiges Fügeverfahren ist dabei das Kleben.

Nach DTN EN 923 wird ein Klebstoff als "nichtmetallischer Werkstoff, der Fügeteile durch Flächenhaftung (siehe Adhäsion) und innere Festigkeit (siehe Kohäsion) verbinden kann" definiert.

Bei chemisch härtenden Klebstoffen, oft auch Reaktionsklebstoffe genannt, werden die einzelnen chemischen Bausteine für den Klebstoff im richtigen Verhältnis in die Klebefuge eingebracht. Die Verfestigung wird durch chemische Reaktion der Bausteine miteinander erreicht. Grundsätzlich unterscheidet man bei den Reaktionsklebstoffen zwischen zwei- (oder mehr-) komponentigen und ein-komponentigen Systemen. Dabei stellen die 2-Komponenten-Epoxid-Klebstoffe eine besonders wichtige Klasse der reaktiven 2-Komponenten-Klebstoffe dar.

### Beschreibung der Erfindung

Aufgabe der vorliegenden Erfindung war es, neue 2-Komponenten-Klebstoffe bzw. ein neues Verfahren zum Verkleben fester Substrate bereitzustellen.

Gegenstand der vorliegenden Erfindung sind zunächst **2-Komponenten-Klebstoffe,** enthaltend ein oder mehreren Epoxidharze als erste Komponente (E) und einen oder mehrere amphiphile Epoxidharzhärter als zweite Komponente (H), mit der Maßgabe, dass der Einsatz der Klebstoffe in der Weise geschieht, dass die beiden Komponenten (E) und (H) in Wasser im Sinne einer Phaseninversionspolymerisation (PIP) umgesetzt werden.

Ein weiterer Gegenstand der vorliegenden Erfindung ist ein **Verfahren zum Verkleben von festen Substraten,** wobei man zwischen die zu verklebenden Substrate eine O/W-Emulsion placiert, die ein oder mehreren Epoxidharzen (E) und einen oder mehrere amphiphile Epoxidharzhärter (H) enthält, wobei die beiden Komponenten (E) und (H) in Wasser im Sinne einer Phaseninversionspolymerisation umgesetzt werden.

Die ausgehärteten Klebstoffe der vorliegenden Erfindung liegen in Form von nanoporösen Polymerschaumstoffen vor. Unter nanoporösen Polymerschaumstoffen sind Polymere zu verstehen, die innere Hohlräume aufweisen. Dabei handelt es sich um schwammartige Strukturen, die sowohl Makro- als auch Mikroporen aufweisen, wobei die Mikroporen dominieren und wobei die Mikroporen mittlere Querschnitte im Bereich von 10 bis 500 nm und insbesondere von 10 bis 100 nm aufweisen.

Die erfindungsgemäß beim Aushärten der 2-Komponenten Klebstoffe unter Umsetzung der Komponenten (E) und (H) im Sinne einer Phaseninversionspolymerisation entstehenden Polymerschaumstoffe zeichnen sich durch eine geringe Wärmeleitfähigkeit bei hoher mechanischer Festigkeit aus. Dies macht die Materialien in Hinblick auf die Verwendung als konstruktive, mechanisch belastbare Materialien besonders attraktiv.

### Zur Phaseninversionspolymerisation (PIP)

Unter Phaseninversionspolymerisation (PIP) ist folgendes zu verstehen: Man stellt zunächst eine wäßrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich selbstverständlich um das Epoxidharz (E).

Während der nun folgenden Umsetzung von Harz und Härter (Aushärtung im Sinne einer Pulyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.

Nach vollständiger Aushärtung liegt nun eine poröse Polymermatrix vor, die in den Kavitäten die Wasserphase enthält. Die Wasserphase lässt sich gewünschtenfalls durch Trocknung entfernen, wobei luftgefüllte Kavitäten entstehen.

Notwendige Bedingung dafür, dass eine Phaseninversionspolymerisation stattfindet ist, dass kein Wasser aus dem Reaktionssystem entweichen kann. Dies wird bei der Verklebung von festen Substraten im wesentlichen bereits dadurch gegeben, dass ein großer Teil des Reaktionssystems bereits durch die festen Substrate umgrenzt ist, so dass ohnehin nur diejenigen Teile des Reaktionssystems nicht abgegrenzt, also gegenüber der Umgebung offen sind, die nicht durch das zu verklebende Substrat abgegrenzt ist. Die genannte Anforderung kann etwa dadurch realisiert werden, dass das Reaktionssystem in einer vollständig abgeschlossenen Form vorliegt. Es ist auch möglich, bei den nicht durch die zu verklebenden festen Substrate umgrenzten Teile des Reaktionsystems dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 - 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren Beginn mit der Bildung der W/O-Emulsion anzusetzen ist. Die PIP kann bei 0 bis 100% Luftfeuchte durchgeführt werden. Der Wassergehalt des PIP-Reaktionssystems wird vorzugsweise auf einen Wert im Bereich von 5 bis 95 Gew.% und insbesondere im Bereich von 20 bis 95 Gew.-% (jeweils bezogen auf das gesamte Reaktionssystem) eingestellt.

Die Aushärtung des Reaktionssystems kann in einem breiten Temperaturbereich durchgeführt werden, vorzugsweise zwischen 1°C und 99°C und insbesondere zwischen 5 °C und 60 °C.

Gewünschtenfalls können dem Reaktionssystem auch Verdicker zugesetzt werden.

Gewünschtenfalls können dem Reaktionssystem auch Füllstoffe zugesetzt werden. Durch den Einsatz ausgewählter Füllstoffe lassen sich dabei sowohl die mechanischen Eigenschaften wie Druckfestigkeit, Biegefestigkeit, E-Modul, Dichte als auch die Wärmeleitfähigkeit der erfindungsgemäßen nanoporösen Polymerschaumstoffe weiter modifizieren.

Gewünschtenfalls können dem Reaktionssystem auch Additive wie zum Beispiel Haftvermittler zugesetzt werden, die die Haftung auf dem zu verklebenden Substrat verbessern.

### Zu den Epoxidharzen (E)

Bei den Epoxidverbindungen (E) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf der Basis von mehrwertigen Alkoholen, Phenolen Hydrierungsprodukten dieser Phenole und/oder von Novolacken (Umsetzungsprodukte von ein- oder mehrwertigen Phenolen mit Aldehyden, insbesondere Formaldehyd in Gegenwart saurer Katalysatoren).

Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, B is-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt. Es können auch Polyglycidylester von Polycarbonsäuren als Verbindungen (F) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Aushärtung des Reaktionssystems, bei der man wie oben gesagt die erfmdungsgemäß einzusetzenden Härter (H) in wässrigem Milieu mit Epoxidverbindungen (E) im Sinne einer Phaseninversionspolymerisation (PIP) umsetzt, können optional zusätzliche dem Fachmann einschlägig bekannte Zusatzstoffe und/oder Verarbeitungshilfsmittel eingesetzt werden. Beispiele hierfür sind Pigmente, Entlüfter, Entschäumer, Dispergierhilfsmittel, Antiabsetzmittel, Beschleuniger, freie Amine, Verlaufsadditive, Viskositätsregulatoren, Haftfähigkeitsverbesserer, Schlagzähigkeitsverbesserer, Leitfähigkeitsverbesserer.

### Zu den Epoxidharzhartern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H*) ein, die erhältlich sind, indem man eine Mischung enthaltend
(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F
zu einem Zwischenprodukt (Z) umsetzt und dieses Zwischenprodukt anschließend mit einem Polyamin (P) umsetzt.

In einer Ausführungsform werden ausschließlich die Komponenten (A), (B) und (C) zu dem Zwischenprodukt (Z) umgesetzt und dieses weiter mit einem Polyamin (P) umgesetzt.

In einer weiteren Ausführungsform werden zur Herstellung des Zwischenproduktes (Z), das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

### Zu den Verbindungen (A)

Unter epoxidierten Polyethylenoxiden werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C₂-C₁₈ in der dem Fachmann bekannten Weise gestartet wird.

Unter epoxidierten Polypropylenoxiden werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C₂-C₁₈ in der dem Fachmann bekannten Weise gestartet wird.

Unter Polyethylenpropylenoxiden werden im Rahmen der Erfindung Verbindungen verstanden, die erhältlich sind, indem man die beiden terminalen OH-Gruppen von Polyethylenpropylenoxid in Oxirangruppen Überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C₂-C₁₈ in der dem Fachmann bekannten Weise gestartet wird.

Die Verbindungen (A) können einzeln oder im Gemisch miteinander eingesetzt werden.

### Zu den Verbindungen (B)

Unter **Bisphenol-A-Epoxiden** werden im Rahmen der Erfindung wie allgemein üblich Verbindungen verstanden, die erhältlich sind, indem man Bisphenol-A mit Epich-Iorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u. a. der Firma Shell.

Die Molekulargewichte der eingesetzten Bisphenol-A-epoxide liegen vorzugsweise im Bereich von 380 bis 3000.

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert. Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

### Zu den Verbindungen (C)

**Bisphenol-A** ist dem Fachmann einschlägig bekannt und wird durch folgende Formel charakterisiert:

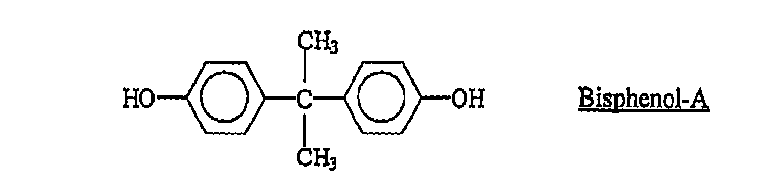

**Bisphenol-F** ist dem Fachmann ebenfalls einschlägig bekannt.

Die Verbindungen (C) können einzeln oder im Gemisch miteinander eingesetzt werden.

### Zu den Verbindungen (P)

Als Polyamine (P) kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden.

Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin Bis(3-aminopropyl)amin, N,N'-Bis(3-aminopropyl)-1,2-ethandiamin, N-(3-aminopropyl)-1,2-ethandiamin, 1,2-diammocyclohexan, 1,3-Diaminocyclohexan, 1,4-Diaminocyclohexan, Aminoethylpiperazine, die Po-ly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclo-hexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

### Zur Herstellung des Zwischenproduktes (Z)

Wie oben ausgeführt sind die Härter (H*) dadurch erhältlich, dass man eine Mischung enthaltend die Verbindungen (A), (B) und (C) zunächst zu einem Zwischenprodukt (Z) umsetzt, welches anschließend mit dem Polyamin (P) umgesetzt wird. In einer Ausführungsform setzt man bei der Herstellung des Zwischenproduktes (Z) die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligte Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so dass die funktionelle Gruppe NH₂ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).

Die Epoxidzahl (%EpO) des Zwischenproduktes liegt vorzugsweise unterhalb von 10% EpO, insbesondere unterhalb von < 5% EpO. Die Definition der Epoxidzahl und die Einzelheiten der analytischen Bestimmung können dem Beispielteil dieser Anmeldung entnommen werden.

### Zur Herstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, dass das Äquivalentverhältnis der reaktiven H-Atome an den A-minostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. überschüssiges Amin kann abdestilliert werden um den Gehalt an freiem Amin möglichst niedrig zu halten.

### Zu den zu verklebenden festen Substraten

Hinsichtlich der zu verklebenden festen Substrate unterliegt die vorliegende Erfindung an sich keinen besonderen Einschränkungen.

So können beispielsweise folgende feste Substrate miteinander verklebt werden: Metalle, Legierungen, Holz, Glas, Keramik, Kunststoffe, mineralische Materialien wie Stein, Beton, Verbundmaterialien. Dabei können sowohl gleiche Materialien, als auch auch unterschiedliche Materialien miteinander verklebt werden, z. B. Holz/Metall, Holz/Kunststoff, usw.

Die zu verklebenden Materialien können als solche eingesetzt werden. Sie können aber auch in Form vorbehandelter fester Substrate eingesetzt werden. Darunter ist zu verstehen, dass ihre Oberflächen durch Vorbehandlung modifiziert sein können. Im Prinzip können dabei alle dem Faschmann einschlägig bekannten Vorbehandlungen zur Anwendung kommen. Beispiele für solche Vorbehandlungen sind etwa Reinigen, Waschen, Spülen, Schleifen, Aufbringung von Konversionsschichten (z.B. Phosphatierung), Primem mit in der Klebstofftechnik üblichen Haftvermittlern, insbesondere mit Epoxisilanen und/oder Aminosilanen.

### Beispiele

### Abkürzungen

Im Folgenden bedeuten:
- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

### Verwendete Rohstoffe

**Epoxidharz (E):** Chem Res E20 (Cognis GmbH)

**Härter (H):** es wurden folgende Härter hergestellt:

### Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt. Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 205,6g einer klaren bernsteinfarbigen Flüssigkeit erhalten mit einer Viskosität (in Substanz, Brookfleld, 10Upm, 40°C) von 2140 mPas, einem Feststoffgehalt von 60% und einer Aminzahl von 134.

### Klebeversuche

Epoxidharze (E) und Härter (H) wurden in einem Rührbecher (Durchmesser 95mn, Höhe 120mm) vorgelegt und mit einem Holzspatel gründlich homogenisiert. Die eingesetzten Mengen an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Gesamtzeit vom Voremulgieren bis zur Verarbeitung betrug ca. 7 Minuten.

Zur Verarbeitung wurde eine überlappende Verklebung mit einer Fläche von 625 mm² auf Standard-Prüfkörpern der Abmessungen 100 x 25x 4 mm hergestellt. Dies bedeutet, dass die Substrate in einer Weise miteinander verklebt wurden, dass sich eine Gesamtlänge des verklebten Prüfkörpers von 175 mm mit einer überlappenden Verklebungsfläche von 25 x 25 mm² (= 625 mm²) ergab, Die Verklebungen wurden fixiert und im Trockenschrank bei 55 °C für 24 Stunden ausgehärtet. Nach Abkühlung auf Raumtemperatur wurde die Zugscherfestigkeit nach ISO 4587 gemessen. Die Ergebnisse sind in Tabelle 1 dargestellt.

**Tabelle 1**

| | **Beispiel 1** | **Beispiel 2** | **Beispiel 3** | **Beispiel 4** | **Beispiel 5** |
|---|---|---|---|---|---|
| **Substrat** | Buchenholz | Buchenholz | Aluminium | Stahl | GFK-Epoxy |
| **Vorbehandlung** | keine | keine | Anschliff | Anschliff, geprimert¹⁾ mit gamma-APS | Anschliff |
| **Härter H1 [g]** | 11,7 | 11,7 | 11,7 | 11,7 | 11,7 |
| **Epoxidharz Chem Res E20 [g]** | | 10,0 | 10,0 | 10,0 | 10,0 |
| **Vollentsalztes Wasser [g]** | 1,8 | 0,0 | 0,0 | 0,0 | 0,0 |
| **Bindemittelgehalt²⁾** [%] | 72,4 | 78,4 | 78,4 | 78.4 | 78,4 |
| **Klebstoffauftrag [g]** | 0,6 | 0,6 | 0,5 | 0,6 | 0.6 |
| **Aushärtatemperatur [°C]** **Aushärtezeit [h]** **Schichtstärke der Verklebung [mm]** **Zugfestigkeit [MPa] Bruchbild** | 55 | 55 | 55 | 55 | 55 |
| | 24 | 24 | 24 | 24 | 24 |
| | 0,1 | 0,3-0,5 | 0,7-1,0 | 1,1-1,4 | 1,0 |
| | 7,05 Substratbruch | 5,25 Substratbruch | 1,46 Enthaftungs-bruch | 5,83 Enthaftungs-bruch | 4.91 Substratbruch |

| | | | | | |
|---|---|---|---|---|---|
| Hinweise zur Tabelle 1: (1) Primer mit gamma-APS (gamma-Aminopropyltrimethoxysilan): Eintauchen der Klebeflächen in eine 10 %ige g-APS-Lösung in vollentsalztem Wasser für 30 Minuten, dann mit Wasser abspülen und 60 Minuten bei 60°C trocknen. (2) Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (10,0g). Vom eingesetzten Härter H1 sind, da er einen Feststoffgehalt von 60% aufweist, lediglich 0,6 x 11,7g = 7,02g zu berücksichtigen. Daraus ergibt sich die Menge des Bindemittels im System zu 7,02 + 10,0 = 17,02g. Das Gesamtsystem enthält zusätzlich 1,8 g Wasser, umfasst mithin eine Gesamtmenge von 11,7g+10,0g+1,8g= 23,5g. Der Bindemittelanteil im Gesamtsystem ergibt sich daraus wie folgt: % Bindemittel = 17,02 x 100 / 23,5 = 72,4%. | | | | | |

## Patentansprüche

1. 2-Komponenten-Klebstoffe, enthaltend ein oder mehrere Epoxidharze als erste Komponente (E) und einen oder mehrere amphiphile Epoxidharzhärter als zweite Komponente (H), mit der Maßgabe, dass der Einsatz der Klebstoffe in der Weise geschieht, dass die beiden Komponenten (E) und (H) in Wasser im Sinne einer Phaseninversionspolymerisation umgesetzt werden.

2. 2-Komponenten-Klebstoffe nach Anspruch 1, wobei man als Komponente (H) solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens einee aromarische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

3. 2-Komponenten-Klebstoffe nach Anspruch 2, wobei man als Polyamin (P) Diethylentriamin einsetzt.

4. 2-Komponenten-Klebstoffe nach Anspruch 2 oder 3, wobei man als Verbindungen (A) epoxidierte Polypropylenoxide einsetzt.

5. 2-Komponenten-Klebstoffe nach einem der Ansprüche 2 bis 4, wobei man als Verbindungen (B) Bisphenol-A-Epoxide einsetzt.

6. 2-Komponenten-Klebstoffe nach einem der Ansprüche 2 bis 5, wobei man als Verbindung (C) Bisphenol-A einsetzt.

7. Verfahren zum Verkleben von festen Substraten, wobei man zwischen die zu verklebenden Substrate eine O/W-P-mulsion placiert, die ein oder mehrere Epoxidharze (E) und einen oder mehrere amphiphile Epoxidharzhärter (H) enthält, wobei die beiden Komponenten (E) und (H) in Wasser im Sinne einer Phaseninversionspolymerisation umgesetzt werden.

8. Verfahren nach Anspruch 7, wobei man als Komponente (H) solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens eine aromatische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

9. Verfahren nach Anspruch 8, wobei man als Polyamin (P) Diethylentriamin einsetzt.

10. Verfahren nach Anspruch 8 oder 9, wobei man als Verbindungen (A) epoxidierte Polypropylenoxide einsetzt.

11. Verfahren nach einem der Ansprüche 8 bis 10, wobei man als Verbindungen (B) Bisphenol-A-Epoxide einsetzt.

12. Verfahren nach einem der Ansprüche 8 bis 11, wobei man als Verbindung (C) Bisphenol-A einsetzt.

13. Verfahren nach einem der Ansprüche 8 bis 13, wobei man die Aushärtung des Reaktionssystems im Temperaturbereich von 1 bis 99 °C durchführt.

14. Verfahren nach Anspruch 13, wobei man die Aushärtung des Reaktionssystems im Temperaturbereich von 5 bis 60 °C durchführt.

15. Verfahren nach einem der Ansprüche 8 bis 14, wobei man den Wassergehalt des Reaktionssystems auf einen Wert im Bereich von 5 bis 95 Gew.-% (bezogen auf das gesamte Reaktionssystem) einstellt.
